(19) Europäisches Patentamt

European Patent Office

Office européen des brevets

(11) **EP 1 443 688 A2**

(12) **EUROPEAN PATENT APPLICATION**

(43) Date of publication:
04.08.2004 Bulletin 2004/32

(51) Int Cl.⁷: **H04B 10/148**

(21) Application number: 03021207.0

(22) Date of filing: 18.09.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 31.01.2003 US 355334

(71) Applicant: **Agilent Technologies, Inc.**
Palo Alto, CA 94306 (US)

(72) Inventors:
• **Tucker, Rodney S.**
Hawthorn, Victoria 3122 (AU)
• **Baney, Douglas M.**
Los Altos,CA 94024 (US)

(74) Representative: **Liesegang, Roland, Dr.-Ing. et al**
**FORRESTER & BOEHMERT**
Pettenkoferstrasse 20-22
80336 München (DE)

(54) **Optical heterodyne receiver**

(57) The polarization of the lightwave at the input to a heterodyne receiver can be determined by measurements of the amplitude of electrical signals without the need for phase measurements. This allows more accurate measurements of the polarization in the presence of noise and allows a determination of the degree of polarization of the lightwave.

Fig. 3

**Description**

BACKGROUND OF INVENTION

The polarization state of a lightwave may be determined by detecting the optical power transmitted through specific polarization filters. Conventional polarimeters typically measure the optical powers $P_0$ - $P_3$ to determine the Stokes parameters $S_0$ - $S_3$. Hence, $S_0$ - $S_3$ are given by:

$$S_0 = P_0 \qquad (1)$$

$$S_1 = 2P_1 - P_0 \qquad (2)$$

$$S_2 = 2P_2 - P_0 \qquad (3)$$

$$S_3 = 2P_3 - P_0 \qquad (4)$$

From the Stokes parameters the degree of polarization, p, may be calculated:

$$p = \frac{\sqrt{(S_1^2 + S_2^2 + S_3^2)}}{S_0} \qquad (5)$$

FIG.1a shows conventional space-division polarimeter 100 where the lightwave on input 101 is split into four separate lightwaves and the resulting lightwaves are processed in parallel. The lightwave on output 102 passes through linear horizontal polarizer 115 and provides $P_1$. The lightwave on output 103 passes through linear 45 degree polarizer 120 and provides $P_2$. The lightwave on output 104 passes through quarter-wave plate 125 and linear 45 degree polarizer to provide $P_3$ which is a measure of circularly polarized light. Quarter-wave plate 125 transforms the circularly polarized portion of the input lightwave to a linear 45 degree lightwave which is passed through linear 45 degree polarizer 130. The lightwave on output 105 passes out directly to provide $P_0$, which is proportional to the total power. Hence, the degree of polarization is determinable from measurements performed by polarimeter 100 using equations (1)-(5).

Some heterodyne optical receivers, such as the Agilent Technologies 81910A and 83453A, may be configured to measure the polarization of the received optical field. In these polarization resolving heterodyne optical receivers, the phase difference between two electrical signals coming from the receiver must be measured to determine the polarization of the received optical field. This phase measurement can be difficult, in particular if the electrical signals contain significant noise. Additionally, the measurements from these heterodyne optical receivers do not allow a determination of the degree of polarization. Hence, it would be desirable to have a heterodyne optical receiving system which overcomes these difficulties and provides the data normally supplied by a conventional polarimeter.

SUMMARY OF INVENTION

In accordance with the invention, the polarization of the lightwave at the input to a heterodyne receiver can be determined by measurements of the amplitude of electrical signals without the need for phase measurements. This allows more accurate measurements of the polarization in the presence of noise and allows a determination of the degree of polarization of the lightwave. All of the polarization resolving receivers may be balanced receivers to reduce the intensity noise.

BRIEF DESCRIPTION OF THE DRAWINGS

FIG. 1a shows a simplified drawing of a prior art polarimeter.
FIG. 1b shows the concept of a polarization-resolving heterodyne receiver in accordance with the invention.
FIGs. 2a-b show alternative positions for placing a polarization synthesizer or waveplate in accordance with the invention.
FIG. 3 shows an embodiment in accordance with the invention.
FIG. 4 shows an embodiment in accordance with the invention.
FIG. 5 shows an embodiment in accordance with the invention of a polarization resolving receiver.
FIG. 6 shows an embodiment in accordance with the invention.

DETAILED DESCRIPTION OF THE INVENTION

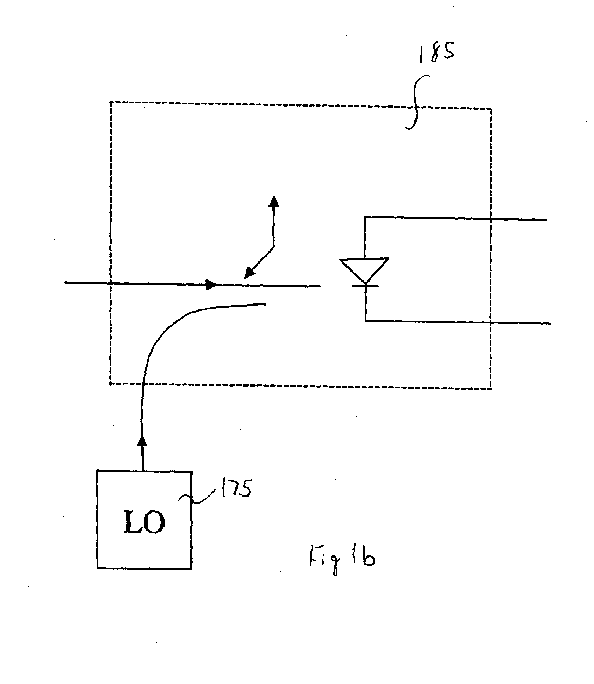

FIG. 1b shows the concept of a polarization-resolving heterodyne receiver in accordance with the invention. Swept local oscillator reference source 175 provides a reference signal proportional to $\cos\omega_1 t$ having a definite linear polarization while the input signal is proportional to $x(t)\cos\omega_2 t$ with an unknown polarization. The typically radio frequency output from receiver 185 is proportional to $2 x(t)\cos\theta\cos(\omega_1-\omega_2)t$ where $\theta$ is the angle between the signal input and the reference signal polarization. The amplitude of the signal detected by receiver 185 is proportional to $2 x(t)\cos\theta$ which is equivalent to the output of an input signal passed through a polarizer positioned at an angle $\theta$ to the polarization of the input signal.

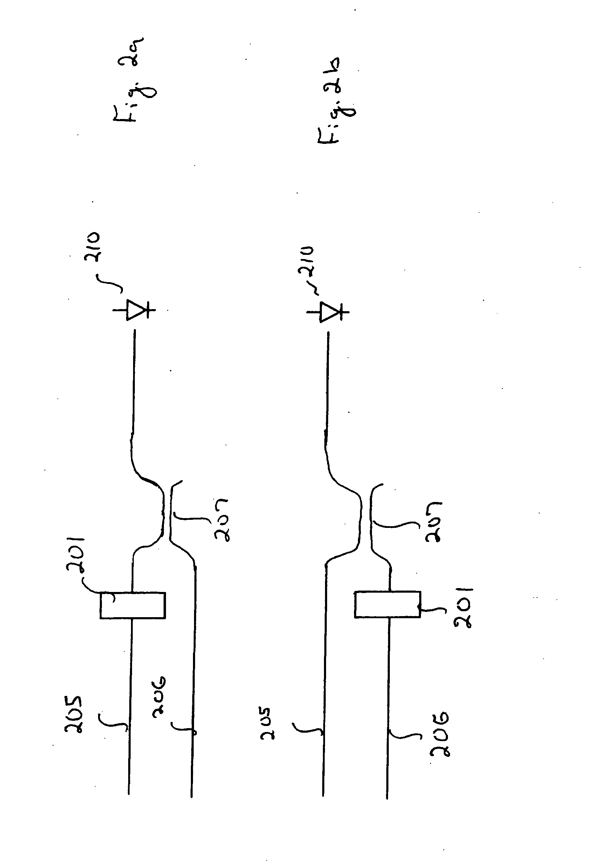

In accordance with the invention a polarization synthesizer or waveplate may be placed in the signal path or in the local oscillator path as shown in FIGs. 2a and 2b, respectively. The two situations may be examined using a Jones matrix analysis. Case 1 shown in simplified form in FIG. 2a assumes polarization synthesizer 201 or waveplate 201 is in signal path 205. Case 2 shown in simplified form in FIG. 2b assumes polarization synthesizer 201 or waveplate 201 is in local oscillator path 206. Taking $J_S$ to represent the Jones matrix for polarization synthesizer 201 in signal path 205 with the signal represented by $S$ and $J_L$ to represent the Jones matrix for polarization synthesizer 201 in local oscillator path 206 with the local oscillator represented by $L$. Coupler 207 combines signal path 205 and local oscillator path 206. The heterodyne intensity signal $R_1$ measured by receiver 210 in case 1 may be written in Jones matrix formalism as:

$$R_1 = L^T[J_S S]^* + [J_S S]^T L^*  \qquad (6)$$

where $T$ denotes the matrix transpose and $*$ denotes the complex conjugate. Similarly, the heterodyne intensity signal $R_2$ measured by receiver 210 in case 2 may be written in Jones matrix formalism as:

$$R_2 = [J_L L]^T S^* + S^T[J_L L]^*  \qquad (7)$$

Setting $R_1 = R_2$ provides the result that in order for the intensities to be equal:

$$J_L = J_S^{-1}  \qquad (8)$$

Hence, if a polarization resolving heterodyne receiver is constructed using a polarization synthesizer in local oscillator path 206, the result is equivalent to having the polarization synthesizer in signal path 205 provided that Eq. (8) is satisfied.

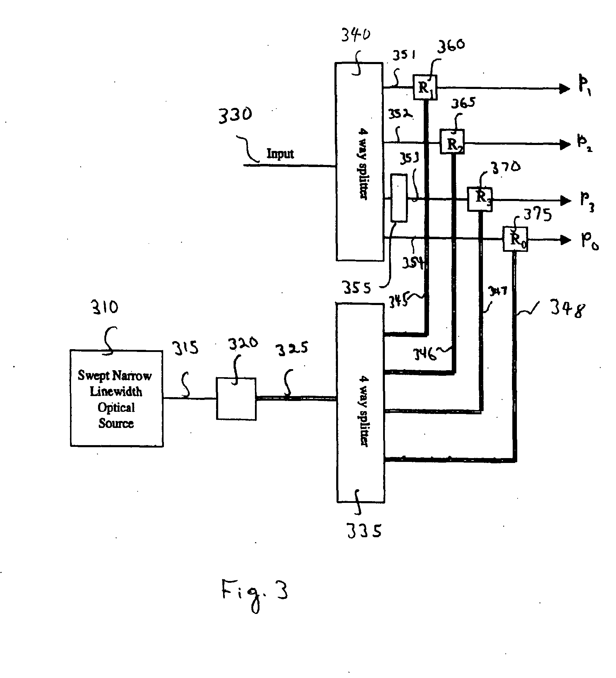

FIG. 3 shows an embodiment in accordance with the invention. Typically, swept narrow linewidth optical source 310 is used to provide the swept local oscillator reference source needed for a heterodyne system. Optical source 310 connects to polarizer 320 by single mode optical fiber 315. Polarizer 320 connects to four way splitter 335 by polarization maintaining optical fiber 325. Four way splitter 335 splits the reference lightwave four ways into polarization maintaining fibers 345, 346, 347 and 348. Polarization maintaining fibers 345, 346, 347 and 348 connect four way splitter 335 to single polarization receiver 360, single polarization receiver 365, single polarization receiver 370 and polarization diversity receiver 375, respectively. An input signal lightwave enters four way splitter 340 on single mode optical fiber 330 and the signal lightwave is split four ways into single mode fibers 351, 352, 353 and 354. Single mode fiber 353 couples through quarter waveplate 355 . Single mode fibers 351, 352, 353 and 354 are also connected to single polarization receiver 360, single polarization receiver 365, single polarization receiver 370 and polarization diversity receiver 375, respectively, as shown in FIG. 3. Note that receivers 360, 365, 370 and 375 may be balanced receivers to reduce intensity noise.

Polarizer 320 receives the reference lightwave from optical source 310 and ensures that the reference lightwave entering polarization maintaining optical fiber 325 is linearly polarized and is properly aligned with the polarization direction of polarization maintaining optical fiber 325. Polarization of the reference lightwave is maintained after splitting by four way splitter 335 into polarization maintaining optical fibers 345, 346, 347 and 348. Polarization maintaining optical fiber 345 is typically oriented such that the linear polarization of the reference lightwave entering single polarization receiver 360 is 0 degrees. Polarization maintaining optical fiber 346 is typically oriented such that the linear polarization of the reference lightwave entering single polarization receiver 365 is 45 degrees. Polarization maintaining optical fiber 347 is typically oriented such that the linear polarization of the reference lightwave entering single polarization receiver 370 is 45 degrees. Quarter wave retarder 355 converts the circularly polarized part of the signal lightwave entering single polarization receiver 370 on single mode optical fiber 353 into 45 degree linearly polarized light prior to reception by single polarization receiver 370. Hence, the polarization of the signal lightwave entering single polarization receiver 370 is 45 degrees. Single polarization receivers 360, 365 and 370 function as polarization sensitive optical heterodyne receivers that convert the input lightwaves into electrical representations. The electrical signal output is related to the intensity of the component of the input signal lightwave polarized in the direction of the reference lightwave. Therefore, the electrical output of single polarization receivers 360, 365 and 370 provides measurements of $P_1$, $P_2$ and $P_3$, respectively.

Polarization diversity receiver 375 functions as a coherent receiver that converts the input lightwaves into electrical representations. The electrical signal output is related to the total intensity of the input signal lightwave. Therefore, the electrical output of polarization diversity receiver 375 provides a measurement of $P_0$.

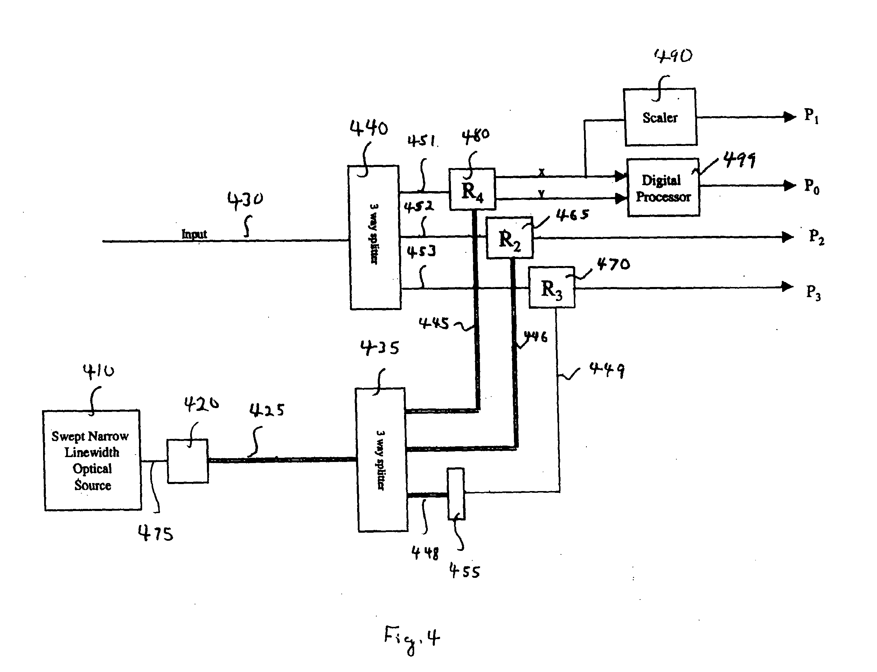

FIG. 4 shows an embodiment in accordance with the invention. Swept narrow linewidth optical source 410 provides the swept local oscillator reference source needed for a heterodyne system. Optical source 410 connects to polarizer 420 by single mode optical fiber 415. Polarizer 420 connects to three way splitter 435 by polarization maintaining optical fiber 425. Three way splitter 435 splits the reference signal lightwave three ways into polarization maintaining fibers 445, 446 and 448. Polarization maintaining optical fibers 445 and 446 connect three way splitter 435 to polarization resolving receiver 480, single polarization receiver 465 and single polarization receiver 470, respectively. Polarization maintaining optical fiber 448 connects to single mode optical fiber 449 via quarter wave retarder 455. Single mode optical fiber 449 connects quarter wave retarder 455 to single polarization receiver 470. Alternatively, quarter wave retarder 455 may be placed in the input signal path between single mode fiber 453 and receiver 470. An input signal lightwave enters three way splitter 440 on single mode optical fiber 430 and the signal lightwave is split three ways into single mode fibers 451, 452 and 453. Single mode fibers 451, 452 and 453 are also connected to polarization resolving receiver 480, single polarization receiver 465 and single polarization receiver 470. Note that receivers 480, 465 and 470 may be balanced receivers to reduce intensity noise.

Polarizer 420 receives the reference lightwave from optical source 410 and ensures that the reference lightwave entering polarization maintaining optical fiber 425 is linearly polarized and is properly aligned with the polarization direction of polarization maintaining optical fiber 425. Polarization of the reference lightwave is maintained after splitting by three way splitter 435 into polarization maintaining optical fibers 445, 446 and 448. Polarization maintaining optical fiber 445 is oriented such that the linear polarization of the reference lightwave entering polarization resolving receiver 480 is 45 degrees. Polarization maintaining optical fiber 446 is oriented such that the linear polarization of the reference lightwave entering single polarization receiver 465 is 45 degrees. Polarization maintaining optical fiber 448 is connected to quarter wave retarder 455. Quarter wave retarder 455 converts the linearly polarized reference lightwave coming from polarization maintaining optical fiber 448 to circularly polarized light that passes to single polarization receiver 470 on single mode optical fiber 449. Single polarization receivers 465 and 470 function as polarization sensitive optical heterodyne receivers that convert the input lightwaves into electrical representations. The electrical signal output is related to the intensity of the component of the input signal lightwave polarized in the direction of the reference lightwave. The electrical output of single polarization receivers 465 and 470 corresponds to $P_2$ and $P_3$, respectively, and provides measurements of $P_2$ and $P_3$.

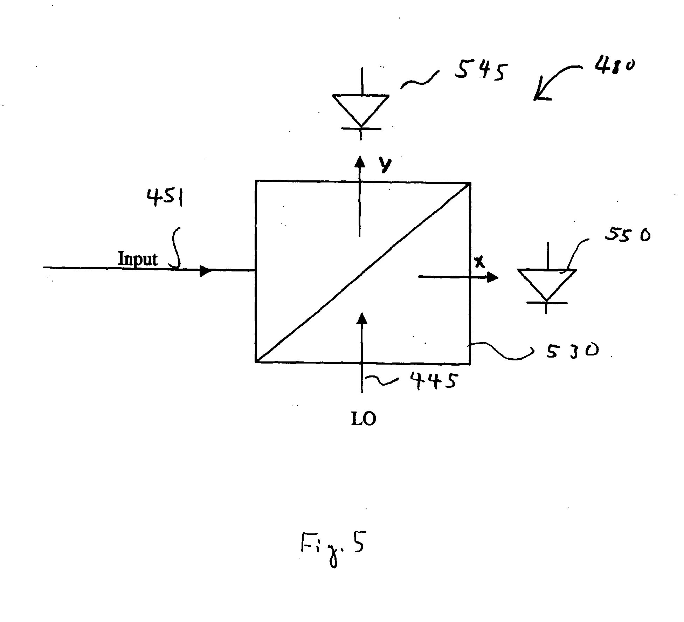

Polarization resolving receiver 480 provides two outputs x and y proportional to the input lightwave polarized in the x direction and the input lightwave polarized in the y direction. FIG. 5 shows an embodiment in accordance with the invention of polarization resolving receiver 480 of FIG. 4. Polarizing beam splitter 530 splits the incoming lightwave from swept narrow linewidth optical source 410 which has a 45 degree polarization into two equal components that mix with the input lightwave from single mode fiber 451. The input signal is polarized with an unknown angle θ with respect to polarizing beam splitter 530 and is split as cos θ (x direction) and sin θ (y direction). Because the reference lightwave from swept narrow linewidth optical source 410 is polarized at 45 degrees, the reference lightwave is equally divided between photodetectors 545 and 550. Squaring and summing the electrical output from photodetectors 545 and 550 in digital processor 499 produces a signal that is independent of the unknown angle θ and taking the square root gives total power $P_0$. The signal in the x direction is proportional to the power in the 0 degree polarization direction and is scaled to $P_1$ by scaler 490. Determining $P_0$, $P_1$, $P_2$ and $P_3$ allows calculation of the Stokes parameters and characterization of the degree of polarization of the input signal.

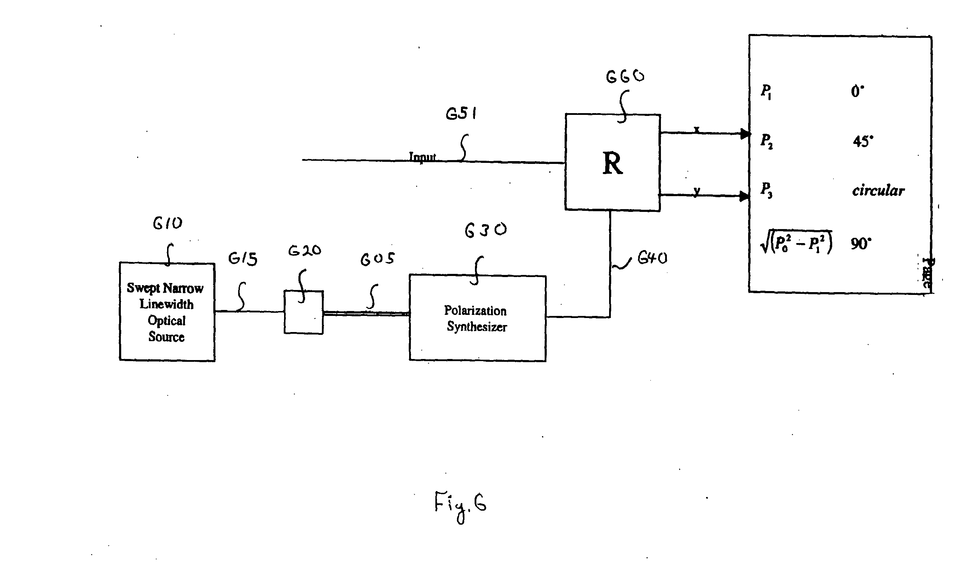

FIG. 6 shows an embodiment in accordance with the invention using polarization synthesizer 630. The embodiment shown in FIG. 6 reduces the number of receivers required to one by introducing polarization synthesizer 630. Swept narrow line width optical source 610 is coupled to polarizer 620 by single mode fiber 615. Polarizer 620 is coupled to polarization synthesizer 630 by polarization maintaining fiber 605. Typically, for the output of a polarization synthesizer to be known and well-defined, it is necessary to have a well-defined input polarization which is accomplished by using polarization maintaining fiber 605 to couple polarizer 620 to polarization synthesizer 630. Polarization synthesizer 630 is coupled to polarization resolving receiver 660 via single mode fiber 640. Polarization resolving receiver 660 is similar to polarization resolving receiver 480 shown in FIG. 5 and has an x and y component output. Polarization resolving receiver 660 is typically a balanced receiver. Polarization resolving receiver 660 is also coupled to receive input signal 651. Polarization resolving receiver 660 functions as a coherent receiver that converts the input lightwaves into electrical representations. In this embodiment, four separate measurements are made at each optical frequency - one measurement for each of the four settings of the polarization synthesizer of 0 degrees for $P_1$, 45 degrees for $P_2$, circular polarization for $P_3$ and 90 degrees for $\sqrt{(P_0^2 - P_1^2)}$, each measurement yielding an x and y component. This allows determination of the degree of polarization and the Stokes parameters $S_0$ - $S_3$ for input signal 651, typically performed by a digital processor (not shown).

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

**Claims**

1. A polarization resolving heterodyne receiver apparatus comprising:

an optical source (610);
a polarization synthesizer (630) coupled to said optical source (610); and
a polarization resolving receiver (660) coupled to said polarization synthesizer (630) and to an input signal line (651), said polarization resolving receiver (660) capable of outputting a signal related to the power in a polarization direction selected by said polarization synthesizer (630).

2. The apparatus of Claim 1 wherein said optical source is a swept narrow line width optical source (610).

3. The apparatus of Claim 1 or 2 wherein said optical source is coupled to said polarization synthesizer (630) using a polarization maintaining optical fiber (605).

4. The apparatus of one of Claims 1 to 3 wherein said polarization synthesizer (630) is coupled to said polarization resolving receiver (660) using a single mode optical fiber (640).

5. The apparatus of one of Claims 1 to 4 wherein said polarization direction is circular.

6. The apparatus of one of Claims 1 to 5 wherein said polarization resolving receiver (660) is capable of outputting a first and second output signal.

7. The apparatus of one of Claims 1 to 6 wherein a polarizer (620) is interposed between said optical source (610) and said polarization synthesizer (630).

8. A polarization resolving heterodyne receiver apparatus comprising:

an optical source (310, 410);
a first splitter (335, 435) coupled to said optical source (310,410);
a plurality of polarization receivers (360, 365, 370,375,480,465,470) coupled to said first splitter (335,435); and
a second splitter (340, 440)coupled to said plurality of polarization receivers (360, 365, 370,375,480,465,470) and to an input signal line (330, 430), such that each of said plurality of polarization receivers (360, 365, 370,375, 480,465,470) are operable to output an electrical signal proportional to an optical power.

9. The apparatus of Claim 8 wherein said first splitter (335,435) is coupled to at least one of said plurality of polarization receivers (360,365,370,375,445, 446) using a polarization maintaining optical fiber (345,346,347,348,445,446).

10. The apparatus of Claim 8 or 9 wherein said optical source (310,410)is a swept narrow linewidth optical source.

11. The apparatus of one of Claims 8 to 10 wherein a polarizer (320,420) is interposed between said optical source and said first splitter.

12. The apparatus of one of Claims 8 to 11 wherein a waveplate (355) is interposed between said second splitter (340) and one of said plurality of polarization receivers (370).

13. The apparatus of one of Claims 8 to 12 wherein one of said plurality of polarization receivers (480) is coupled to a scaler (490).

14. The apparatus of one of Claims 8 to 13 wherein one of said plurality of polarization receivers (480) is capable of outputing a first and second output signal, said first output signal being proportional to the input lightwave polarized in the x direction and said second output signal being proportional to the input lightwave polarized in the y direction.

15. The apparatus of one of Claims 8 to 14 wherein one of said plurality of polarization receivers is a polarization diversity receiver (375).

16. The apparatus of one of Claims 8 to 15 wherein a waveplate (455) is interposed between said first splitter (435) and one of said plurality of polarization receivers (470).

185

LO 175

Fig 1b

EP 1 443 688 A2

205 201 210

Fig. 2a

206 207

205 210

Fig. 2b

206 207 201

Fig. 3

Fig. 4

Fig. 5

EP 1 443 688 A2

Fig. 6

EP 1 443 688 A2